# EUROPEAN PATENT SPECIFICATION

(11) **EP 0 393 230 B1**
(45) Date of publication and mention of the grant of the patent: **15.11.1995**
(21) Application number: 89107956.8
(22) Date of filing: 02.05.1989
(51) Int. Cl.: C08G 65/00

(54) **Functionalized fluoropolyethers**
Funktionalisierte Fluoropolyether
Polyéthers fluorés fonctionalisés

(30) Priority: 20.04.1989 IT 4786989
(43) Date of publication of application: 24.10.1990
(73) Proprietor: AUSIMONT S.p.A., I-20100 Milano (IT)
(72) Inventor: Marchionni, Giuseppe, Dr., I-20133 Milan (IT); Gavezotti, Piero, Dr., I-20148 Milan (IT); Strepparola, Ezio, Dr., I-20047 Treviglio Bergamo (IT)
(74) Representative: Barz, Peter, Dr.

(56) References cited:
- EP-A- 0 151 877
- EP-A- 0 195 946
- EP-A- 0 259 980
- AT-A- 307 052
- DE-A- 3 739 447

## Description

The present invention relates to functionalized fluoropolyethers comprising sequences of statistically distributed perfluorooxyalkylene units selected from: 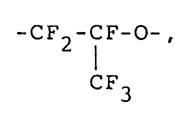
-CF₂-CF₂-O-; -CF₂O-, 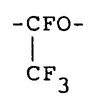
and having a functional end group Y, the other end group being a perfluoroalkyl group wherein one or two fluorine atoms have been replaced by halogen atoms different from fluorine, said fluoropolyethers being represented by the following general formulae (I), (II) and (III): 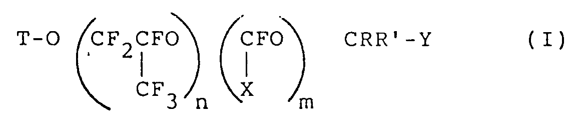
wherein: X is F or CF₃, R and R', the same or different from each other, are selected from F, Cl, Br and I, preferably from F and Cl; T is a perfluoroalkyl group containing from one to three carbon atoms wherein one or two fluorine atoms have been replaced by Cl and/or Br and/or I (preferably by Cl); particularly preferred are groups of the following formulae:
ACF₂-,ACF(CF₃)CF₂- or ACF₂CF(CF₃)-;
(A = Cl, Br or I preferably Cl);
n ranges from 0.85 to 15, with m/n ranging from 0.01 to 0.5;
Y may be -CN; -CH₂Z; -COR'''; or a group of formula: 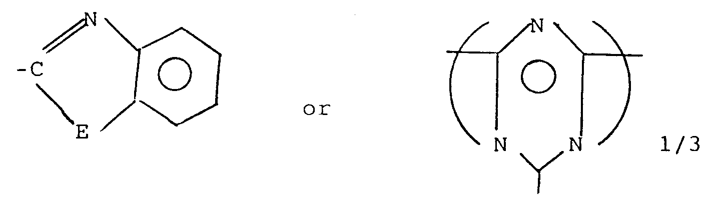
(E = NH, O or S)
wherein:
(A) for Y = -CH₂Z, Z may be a group OR'', where R'' may be a hydrogen atom or a group selected from: 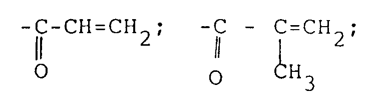 -(CH₂CH₂O)_{b}H 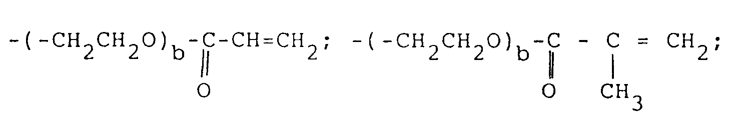 (b = a number ranging from 1 to 15)
-CH₂-CH=CH₂; 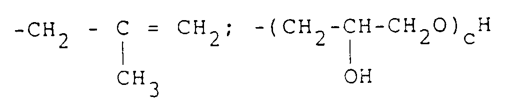
(c = a number ranging from 1 to 3); 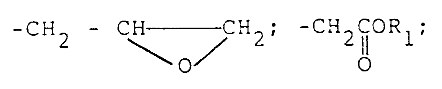
(R₁ = an alkyl containing from 1 to 30, particularly 1 to 18, and preferably 1 to 12 carbon atoms, and optionally containing (one or more) interspersed oxygen atoms;
or R₁ is a group -(CH₂-CH₂O)ₙH wherein n ranges from 1 to 15) 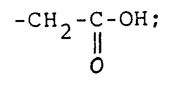
-CH₂-CH₂-CH₂SO₃H; 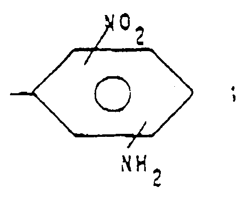
and furthermore naphthyl; a mono- or poly- (e.g. di- or tri-) substituted alkyl benzyl or alkoxy benzyl group of type: 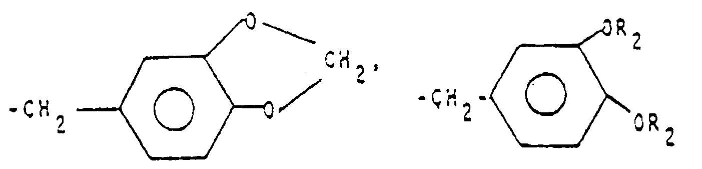
(R₂ = an alkyl group containing from 1 to 4 carbon atoms, preferably methyl or ethyl); or Z may be a nitrogen-containing group -NR₃R₄; where R₃ and R₄, the same or different from each other, may be hydrogen or they may be, either individually or both, R₁ groups as defined hereinabove, or, when R₃ = H, R₄ may be a group of formula: 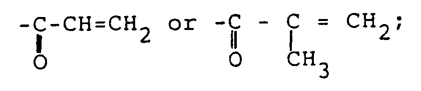
or R₃, R₄ and N together may form an imidic ring of formula: 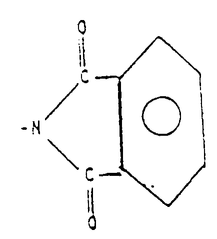
wherein the phenyl group may contain a substituting group of the anhydride type, i.e. 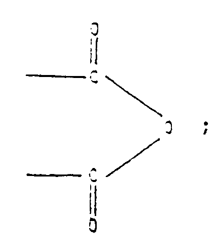
(B) for Y = COR''', R''' may be a -NHR₅ group, where R₅ may be hydrogen or alkyl with 1 to 8 (preferably 1 to 4) carbon atoms, or R₅ may be a mono- or poly-(e.g. di- or tri-) hydroxyalkyl group having 1 to 8 (preferably 1 to 4) carbon atoms; aminoalkyl with 1 to 8 (preferably 1 to 4) carbon atoms; an allyl group; a methallyl group; a trimethoxy-or triethoxy-silylalkyl group of formula: R₆-Si(OCH₃)₃ or R₆Si(OC₂H₅)₃, where R₆ = alkylene with 1 to 8 (preferably 1 to 4) carbon atoms; an isocyano alkyl group of formula R₆NCO (R₆ see above), an optionally alkyl-substituted isocyanocycloalkyl group with 5 or 6 carbon atoms in the ring, or an optionally alkyl-substituted isocyano aryl group with 6 to 10 carbon atoms (e.g. isocyano phenyl or -naphthyl) or R''' may be an optionally (preferably C₁₋₄) alkyl- or halogen-(e.g. F, Cl, Br)substituted aromatic (e.g. phenyl or naphthyl) radical such as, for example: pentafluorophenyl, bromotetrafluorophenyl, dibromodifluorophenyl, bromophenyl, bromobenzophenyl;

T'-O (CF₂CF₂O)ₚ (CF₂O)ₛ CRR' Y (II)

wherein: T' = ACF₂CF₂-, ACF₂-, ACF₂CF(A)-; R, R', A and Y are the same as defined hereinbefore for formula (I); p ranges from 1 to 20, and s/p is a number of from 0.5 to 2; 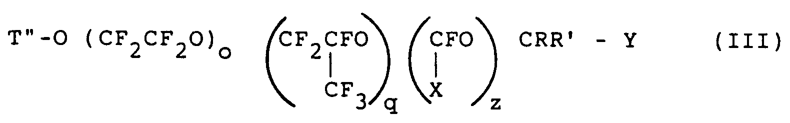
wherein: Y, X, R and R' are the same as defined above for formula (I);
T'' is equal to T or T', o and q are numbers, zero included, such that $\text{o+q = 1}$ to 20 and $\text{z/o+q}$ ranges from 0.01 to 0.05.

In the above formulae the indices n, m, o, p, s, q and z represent the average number of the respective units in brackets.

The products forming the object of the present invention may be prepared by starting from fluoropolyethers comprising sequences of perfluorooxyalkylene units distributed at random and selected from: 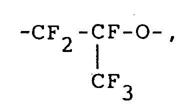
-CF₂CF₂-O-, -CF₂O- and 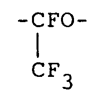
and being represented by the following general formulae: 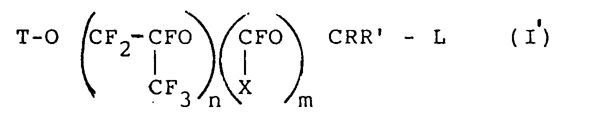
where: X is F or CF₃; R and R', the same or different from each other, are selected from F, Cl, Br or I;
L is 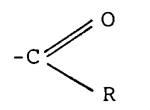
with R being the same as defined hereinabove, or L is the corresponding -COOH group or a salt (e.g. of ammonium, Na, K, Ca or Mg) or an ester (e.g. C₁₋₈ alkyl ester) thereof; T is a perhaloalkyl group containing from 1 to 3 carbon atoms and one or two atoms selected from Cl, Br or I (the remainder being F atoms); preferably, T is selected from ACF₂-, 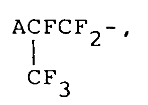
and ACF₂CF(CF₃)- wherein A is Cl, Br or I (preferably Cl); n ranges from 0.85 to 15 and m/n ranges from 0.01 to 0.5;

T'-O (CF₂CF₂O)ₚ (CF₂O)ₛ CRR'―L (II')

wherein:
T' = ACF₂CF₂-, ACF₂-, ACF₂CF(A)-
L, R, R' and A being the same as defined hereinbefore for formula (I), p ranging from 1 to 20 and s/p ranging from 0.5 to 2. 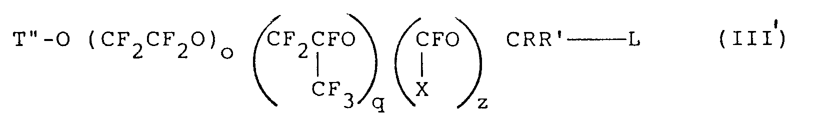
wherein: L, X, R and R' are the same as defined hereinbefore for formula (I'),
T'' is equal to T or T', o and q are numbers, zero included, such that $\text{o+q = 1 to 20}$ , $\text{z/o+q = from 0.01 to 0.05}$ .

In particular, the following cases may be considered:
1) Y = -COR'''
   In this case, the possibilities are as follows:
   (a) R''' =-NHR₅
      The corresponding products are amides. They are preparable by reacting ammonia or amines of formula NH₂R₅ with the corresponding alkyl esters, if the amines are strongly basic, or with the corresponding phenyl esters of the corresponding acylhalides, if the amines are weakly basic or highly sterically hindered. Separation and purification of the products may be carried out by conventional techniques. Another method comprises the reaction of the fluoropolyether having an acid end group -COOH with compounds containing -NCO(isocyanate) groups at temperatures ranging from 100° to 120°C, under generation of CO₂.
   (b) R''' = optionally substituted aromatic radical.
      In this case the products are ketones which are preparable by means of Friedel-Crafts reaction between the corresponding aromatic compound and the perfluoropolyether containing an acyl group (-COCl), or by reacting lithium-aromatic derivatives and perfluoropolyethers having an ester end group.
2) Y =-CH₂Z
   In this case there are the following possibilities:
   (a) Z = OR''
      Products of this type are obtainable from the corresponding carboxylic (or ester) starting materials by reduction of the group 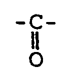 with Li, Na, B, Al complex hydrides. Usually, the initial product will be the alcohol derivative (-CH₂OH). The remaining derivatives are preparable by nucleophilic reaction of the corresponding alcoholate with compounds of formula R''X, where X is a removable halogen, generally chlorine, or by addition of the alcoholate to cyclic epoxy compounds.
      For example, when R'' is the group 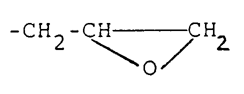 one can react the Na or K alcoholates with an excess of epichlorohydrin. After having removed the excess epichlorohydrin, neutralization is cautiously carried out at low temperatures (cooling) and the glycidyl ether is separated by extraction and, if necessary, by distillation;
      when R'' = the group 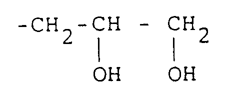 it is possible to react alcohols (-CH₂OH), in the presence of traces of alcoholate (as catalyst) with glycidyl alcohol at 60-80°C, whereafter the reaction mixture is acidified and the polyhydroxy derivative is separated;
      when R'' is a -CH₂COOR₁ group
      it is possible to react the Na or K alcoholate with, e.g., ethyl chloroacetate in an ether solvent; the product can be obtained after having repeatedly washed the organic phase, optionally enriched with FC 113 (1,1,2-trichloro-1,2,2-trifluoroethane), with water;
      when 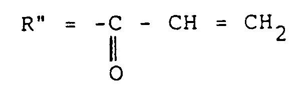 the alcohol may be reacted with acrylylchloride in an ether solvent in the presence of a tertiary base;
      when R'' = -(CH₂CH₂O)ₙH
      the alcohols may be reacted, in the presence of catalytic amounts of alcoholate, with ethylene oxide at temperatures around 100°C;
      when R'' is 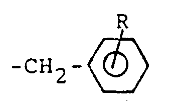 one may react the alcoholates with the chloromethyl aromatic derivatives in inert solvents; when R is allyl it is possible to react the alcoholates with allyl chloride or bromide under conditions such as to cause the precipitation of the alkali metal chlorides or bromides, whereafter the allylethers may be extracted.
      For the functional groups which are farther away from the perfluoropolyether chain, the reactions already known in organic chemistry are utilizable, since in such a position there is no influence of the fluoroether group any longer.
   (b) Z =-NR₃R₄

      In this case the products are preparable by reduction, according to conventional methods, of the corresponding amide derivatives when R₃ and R₄ do not contain reducible groups. In the remaining cases the products may be obtained from the corresponding perfluoropolyethers containing end groups of formula 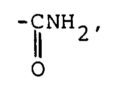 prepared as mentioned hereinbefore, by reduction with the hydrides mentioned above, and by subsequent reaction of one or two hydrogen atoms of the -NH₂ group with R₄X compounds (X = halogen), or, when R₃ and R₄ form a cyclic imide, by direct reaction of the -NH₂ group with a cyclic anhydride of formula: 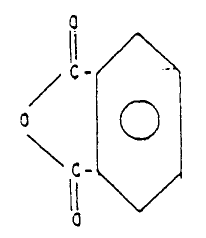 said reaction being carried out e.g. in polar aprotic solvents or in bulk, at high temperatures (e.g. 150°-200°C).
3) When Y = CN, the corresponding products may be obtained by dehydration of the -CONH₂ group of the corresponding amide derivative with P₂O₅, at temperatures from about 100° to about 200°C.

The fluoropolyethers having an acid functional end group, to be used as starting products for preparing the compounds of the present invention, can be prepared by photooxidation of perfluoropropene and/or tetrafluoroethylene in the presence of minor amounts of a thoroughly (per)halogenated ethylene containing fluorine and at least one halogen atom different from fluorine. The photooxidation product then is thermally treated to remove the peroxide groups contained therein.

Such fluoropolyethers and the process for preparing them are described in EP-A-340 740
The functionalized fluoropolyethers of the present invention are particularly capable of reacting with organic and inorganic substrates, as well as with end groups containing 1 or 2 halogen atoms different from fluorine. They can be used as surface modifiers for polymeric and inorganic materials, in order to impart properties which are typical of the fluorinated products, such as water- and oil-repellency, low friction coefficients, low refraction index and the like.

The following examples illustrate the present invention, but are not to be construed as a limitation of the scope thereof.

### EXAMPLE 1

In a glass flask having, superposed thereon, a Vigreux column (8x150 mm) and a Liebig condenser 17 g of a mixture of acids of formula:

Cl C₃F₆O(C₃F₆O)ₙ(CF₂O)ₘCF₂COOH,

prepared according to the procedure described in examples 1 through 6 of Italian patent application No. 20,406 A/88 (and the corresponding European patent application), where n has an average value of 0.85 and m has an average value of 0.02, were mixed with 6 g of P₂O₅, and the resulting mixture was heated from 100° to 200°C. Obtained were 12 g of a liquid which distilled in the range of from 170° to 180°C and, in the infrared spectrum, showed absorptions at 1805-1870 cm⁻¹ characteristic for carbonyl groups, but no bands attributable to hydroxy groups in the range from 3300 to 3600 cm⁻¹. Thus, said product can be concluded to have the structure of an anhydride of formula:

[Cl C₃F₆O(C₃F₆O)_{0.85}(CF₂O)_{0.02} CF₂CO]₂O.

14 g of the same acid as above were reacted with 10 ml of thionyl chloride, for 8 hours under reflux, in the presence of 0.01 g of pyridine. After the reaction most of the excess thionyl chloride was distilled off, whereafter the resulting concentrate was distilled, thereby obtaining, in the boiling point range of from 105° to 120°C (at 760 mm Hg), 9 g of a product characterized, in the infrared spectrum, by a pronounced absorption at 1805 cm⁻¹ and by the absence of absorptions in the range from 3300 to 3600 cm⁻¹. On the basis of the percentage of hydrolizable chlorine (with aqueous NaOH, 0.5 N), the formula:

Cl C₃F₆O(C₃F₆O)_{0.85}(CF₂O)_{0.02}CF₂COCl

could be assigned to said product.

7 g of the above product, mixed with 1.5 g of anhydrous benzene, were added to a suspension of 3.5 g of AlCl₃ in 15 ml of CH₂Cl₂, cooled to 0°C and maintained under stirring. During the reaction, the mixture turned red and became homogeneous. After a 4-hour reaction, the mixture was poured into ice water and the separated organic phase was collected, washed with water and bicarbonate, dried over Na₂SO₄, concentrated by evaporation of CH₂Cl₂ and distilled, thereby obtaining, at 195-198°C, a compound (3 g) characterized, in the infrared spectrum, by absorption bands at 1720 cm⁻¹ (carbonyl) and at 1500 and 1600 cm⁻¹ (benzene ring), wherefore the structure:

Cl C₃F₆O(C₃F₆O)_{0.85}(CF₂O)_{0.02}CF₂COC₆H₅

was attributed to the product.

### EXAMPLE 2

In a 250 ml flask, with a rectification column (1x100 cm) packed with Helipack® superposed thereon, 90 g of a mixture of acids of formula:

Cl C₃F₆O(C₃F₆O)ₙ(CF₂O)ₘCF₂COOH,

prepared as in example 1, where n has an average value of 1.27 and m is equal to 0.05, were reacted with 100 g of ethanol (99.9%) in the presence of 2 g of H₂SO₄ (96%) and 60 g of benzene. The temperature was maintained so as to keep the mixture boiling. For 3 hours no distillate was withdrawn; then, with a reflux ratio of about 20, the azeotrope (water, benzene, ethanol = 43 ml) was collected on the top within 6 hours. Then, by reducing the reflux ratio to 5, most of the benzene-ethanol azeotrope (140 ml) was allowed to distill. At the end, the obtained product was poured into ice water and immediately separated, whereafter it was dried over Na₂SO₄ and distilled, thereby collecting, at 170-180°C, 82 g of product.
On infrared analysis, said product did no longer exhibit the bands which are typical of the acid, and, in contrast to the starting mixture of acids, could not be titrated with a solution of triethylamine in methanol.
The N.M.R. analysis evidenced the presence of the ester group: 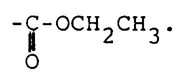
43 g of the ethyl ester thus obtained were dissolved in 150 ml of ethyl ether cooled to 0°C and a gaseous ammonia flow was passed through the solution for 2 hours. After said period of time the reaction was completed. After evaporation of the ether, the remaining liquid was rectified, making it possible to collect, between 240° and 260°C, a product, which, in its infrared spectrum, was characterized by absorptions at 1740 cm⁻¹ and 1610 cm⁻¹.

Therefore, the product had the amide structure of formula:

ClC₃F₆O(C₃F₆O)_{1.27}(CF₂O)_{0.05}CF₂CONH₂.

14 g of the above-mentioned ethyl ester were dissolved in 10 ml of ethyl ether whereafter 2.4 ml of n-butylamine were added.

The mixture was reacted for 1 hour, then the solvent was removed and distillation was carried out, thereby collecting, between 220° and 230°C, a product which, based on elemental analysis (C = 34.4%, Cl = 7.9%, F = 40.5%, H = 2%) and on infrared and ¹⁹F-N.M.R. analyses was confirmed to be the amide of structure:

ClC₃F₆O(C₃F₆O)_{1.27}(CF₂O)_{0.05}CF₂CONHC₄H₉.

### EXAMPLE 3

In a glass flask equipped with a condenser 9.4 g of the amide of formula:

Cl C₃F₆(C₃F₆O)_{1.27}(CF₂O)_{0.05} CF₂CONH₂,

of the preceding example 2 were mixed with 20 g of P₂O₅ and the resulting mixture was heated at 150°-180°C for two hours. After having removed the condenser, the obtained liquid product was distilled and redistilled, thereby collecting 7 g of a fraction boiling between 120° and 130°C. The product constituting said fraction was characterized, in its infrared spectrum, by a sharp absorption band at 2250 cm⁻¹, which is typical of the group -CN, wherefore the formula of the nitrile:

Cl C₃F₆O(C₃F₆O)_{1.27}(CF₂O)_{0.05}CF₂CN

was attributed to the product.

### EXAMPLE 4

A sample (20 g) of phenyl ester of formula:

ClC₃F₆O(C₃F₆O)_{1.27}(CF₂O)_{0.05}CF₂COOC₆H₅,

prepared by starting from 10 ml of the acid described in example 2, conversion thereof to the corresponding acyl chloride and subsequent reaction with phenol in the presence of pyridine and washing with a hydroalcoholic solution, was reacted with 3.7 g of o-phenylenediamine by gradually heating the reaction mixture form 30° to 200° within 20 hours. The obtained product was a green solid having a melting temperature of 65-70°C and a boiling temperature of 230°-260°C which was characterized by sharp absorption bands, in its infrared spectrum, at 1450, 1490, 1540 and 1590 cm⁻¹ (belonging to condensed rings and to the group -C=N- in the ring), as well as by a broad absorption in the range between 2700 and 3100⁻¹ (due to C-H and N-H bonds).
The elemental analysis (C = 32.5%, Cl = 6.4%, H = 0.1%, F = 54.9%) confirmed that the product had the following structure:

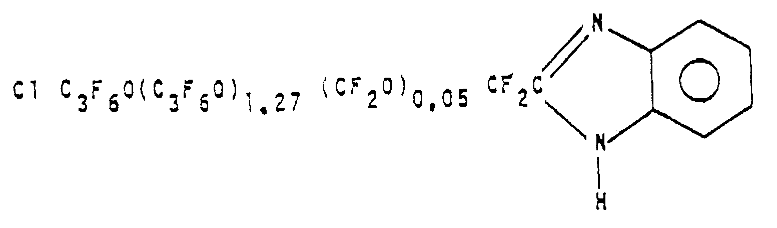

### EXAMPLE 5

10 g of the nitrile of example 3 were reacted in a glass vial at a temperature of -50°C with anhydrous ammonia in excess. After completion of the reaction the excess ammonia was removed from the product, to which the structure of the corresponding amidine of formula: 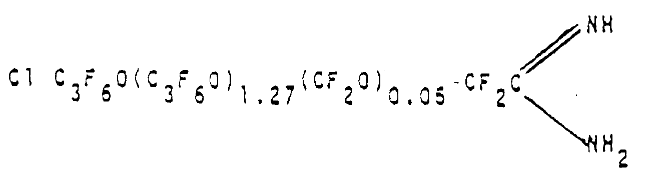
was assigned on the basis of the typical infrared absorption bands at 1600 cm⁻¹, characteristic for the imine group, and in the range between 3400-3100 cm⁻¹, corresponding to N-H bonds.
A sample (5 g) of the amidine thus obtained, after having been gradually heated up to 300°C within 8 hours until completion of ammonia evolution, was converted to a highly viscous liquid characterized,in its infrared spectrum, by a single sharp absorption band at 1550 cm⁻¹, corresponding to the -C=N- group of the triazine ring, wherefore the structure of sym-polyoxachloroperfluoroalkyltriazine of formula 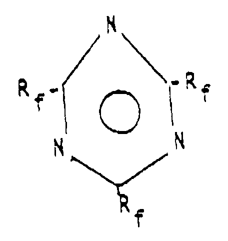
(R_{f} = radical ClC₃F₆O(C₃F₆O)_{1.27}(CF₂O)_{0.05}-CF₂)-can be assigned to said product.

### EXAMPLE 6

50 g of ethyl ester of formula

ClC₃F₆O(C₃F₆O)_{1.27}(CF₂O)_{0.05}CF₂COOC₂H₅,

prepared according to example 2, where added, within 2 hours, to a suspension of 4 g of LiAlH₄ in 250 ml of anhydrous ethyl ether, at a temperature ranging from room temperature to 35°C. After a 3-hour reaction, the excess of LiAlH₄ was decomposed with HCl (5%), whereafter the ether phase was separated, dried with Na₂SO₄, concentrated and then distilled at atmospheric pressure. The product boiling in the range from 150° to 170°C was collected.
On infrared analysis, this product did no longer exhibit the absorption bands attributable to carbonyl groups but showed a broad band attributable to hydroxyl groups. After treatment with a predetermined amount of acetic anhydride, in the presence of pyridine and ethyl ether, the excess of anhydride was hydrolyzed after 12 hours. Acetic acid was retitrated and based thereon for the above product an equivalent weight of 490, with respect to hydroxy, was calculated.
The ¹H-NMR analysis confirmed the following structure of the product:

ClC₃F₆O(C₃F₆O)_{1.27}(CF₂O)_{0.05}CF₂CH₂OH.

### EXAMPLE 7

55 g of the amide of formula

ClC₃F₆O(C₃F₆O)_{1.27}(CF₂O)_{0.05}CF₂CONH₂,

prepared according to example 3, were added, within 2 hours, to a suspension of 4 g of LiAlH₄ in 300 ml of ethyl ether at room temperature.
After a 2-hour reaction at room temperature and a 2-hour reaction at 35°C, the excess of LiAlH₄ was decomposed at 0°C with aqueous tetrahydrofuran, whereafter 500 g of H₂O and 50 ml of aqueous NaOH (40%) were added to the mixture.
The organic layer was separated, dried over Na₂SO₄ and distilled; the fraction boiling between 140° and 160°C (40 g) was collected.
The infrared analysis did no longer reveal absorption bands attributable to carbonyl groups.
Thus, the structure:

ClC₃F₆O(C₃F₆O)_{1.27}(CF₂O)_{0.05}CF₂CH₂NH₂

was assigned to the product; the amine equivalent weight, determined by titration with HClO₄ (0.1 N) in acetic acid, was 495.

### EXAMPLE 8

A solution of 1.6 ml of acrylyl chloride in 20 ml of ethyl ether was added to a solution of 11 g of an amine of formula:

ClC₃F₆O(C₃F₆O)_{1.98}(CF₂O)_{0.08}CF₂CH₂NH₂,

prepared according to the procedure of example 7 (starting from the amide of the corresponding acid), and of 2.8 ml of triethylamine in 100 ml of ethyl ether cooled to 0°C and maintained under stirring. The mixture was reacted for 3 hours at 0°C whereafter it was filtered.
To the resulting ether solution was added 0.1 g of phenothiazine 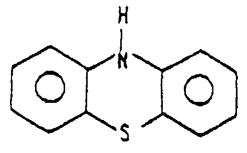
whereafter the mixture was concentrated and distilled: 7 g of product boiling in the range from 105° to 115°C under a pressure of 15 mm Hg, were collected. Said product was characterized by absorption bands, in the infrared spectrum, at 1730 cm⁻¹ (attributable to carbonyl) and at 1625 cm⁻¹ (attributable to the double bond). Therefore the structure of an acrylamide of formula:

ClC₃F₆O(C₃F₆O)_{1.98} (CF₂O)_{0.08} CF₂-CH₂NHCO-CH=CH₂

was assigned to the product.
The ¹H-HMR analysis confirmed the above structure.

### EXAMPLE 9

A mixture of acids of formula

TO(C₂F₄O)ₙ(CF₂O)ₘCF₂COOH,

obtained according to the procedure of examples 9 to 19 of Italian patent application No. 20,406 A/88 (and its European counterpart), wherein: T = ClCF₂ or ClCF₂CF₂, $\text{m/n = 1.2}$ with a molar ratio: -COOH/T = 1.1 and having an average molecular weight equal to 900, was esterified as described in example 2.
After removal of the alcoholic phase, the layer consisting of the ethyl esters of the perfluorinated acids was purified by stripping under vacuum at 100°C for 2 hours.
150 g of said esters were distilled; the products distilling in the range from 195° to 210°C were collected, and were characterized, in their infrared spectrum, by an absorption at 1790 cm⁻¹. Said products were then reduced to monofunctional alcohols of formula:

TO(C₂F₄O)ₙ(CF₂O)ₘCF₂CH₂OH

by means of LiAlH₄, as described in example 6.
The products thus obtained had a boiling temperature in the range of from 175° to 190°C.

### EXAMPLE 10

A mixture of acids of formula: 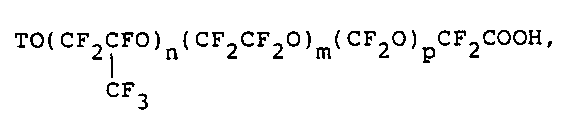
prepared according to examples 21-23 of Italian patent application No. 20,406 A/88 (and its European counterpart)where T = ClC₃F₆-, ClCF₂- or ClC₂F₄-,
and characterized by average values of m, n and p such that $\text{p/m+n = 0.02}$ and $\text{m/n = 0.5}$ , a -COOH/T molar ratio of about 1 and an average molecular weight of 850, was reacted corresponding to the procedure of example 2 in order to obtain the corresponding ethyl ester, 20 g of said ester were dissolved in 100 ml of a mixture of ethyl ether and FC 113 (1,1,2-trichloro-1,2,2-trifluoroethane) (1/1 by volume) cooled to 0°C. The solution was subjected to a gaseous ammonia flow for 3 hours. After evaporation of the solvent, the residue consisted of a mixture of amides of formula: 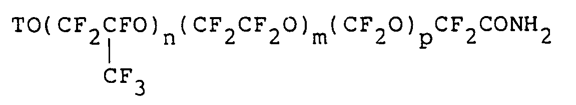
as confirmed by the presence of absorption bands at 1740 cm⁻¹ in the infrared spectrum; T, n, m and p being the same as defined hereinbefore.

### EXAMPLE 11

10 g of the amide mixture obtained in example 10 were treated with 20 g of P₂O₅ at 150°-180°C for 3 hours. The liquid product obtained after the reaction was recovered by distillation and identified as a mixture of nitriles of formula 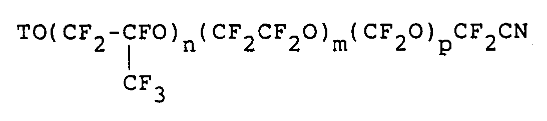
by infrared analysis (absorption at 2250 cm⁻¹).

### EXAMPLE 12

50 g of ethyl ester

ClC₃F₆O(C₃F₆O)_{1.27}(CF₂O)_{0.05}CF₂COOC₂H₅,

prepared according to example 2, were dissolved in 150 ml of a mixture of 1,1,2-trichloro-1,2,2-trifluoroethane (FC 113) and methanol (1/1 weight ratio). To said solution were then added 15 g of aminopropyltriethoxysilane whereafter the resulting mixture was heated to reflux. Upon completion of the reaction, the solvent and the excess reagent were evaporated. The infrared analysis revealed the disappearance of the ester absorption band at 1790 cm⁻¹, while the presence of a band at 1740 cm⁻¹ corresponding to the amide group was observable. The NMR analysis (¹⁹F and ¹H) revealed that the product had the following structure:

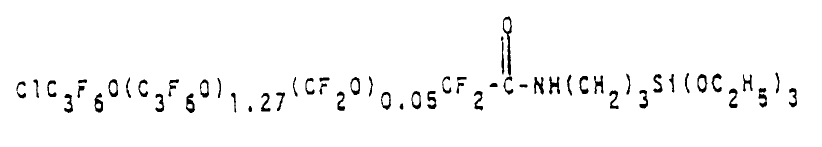

### EXAMPLE 13

A sample of 50 g of a methylester mixture prepared according to the procedure described in example 20 of Italian patent application No. 20,406 A/88 (and its European counterpart), starting from a brominated product obtained according to example 25 of said application, said esters having the formula: 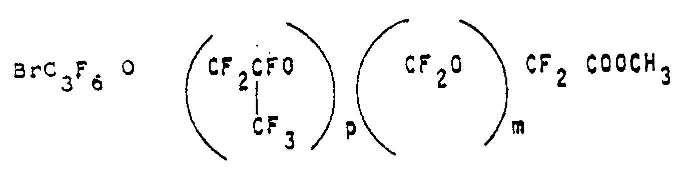
where p has an average value of 2.52 and m has an average value of 0.1, and having an average molecular weight of 800, was added dropwise to a solution of 3.5 g of anhydrous NaBH₄ dissolved in 100 ml of absolute ethyl alcohol, at a temperature of about 20°C. Upon completion of the addition (40 minutes), the whole mixture was maintained under stirring at 20°C for 1 hour. Then an aqueous solution of hydrochlorid acid (5%) was added until the pH was definitely acidic. 80% of the introduced ethyl alcohol were distilled and, after cooling, from the heavy phase there were obtained, by distillation under vacuum (0.5-1 mm Hg at 90°-110°C), 39 g of an oil which, on infrared analysis, did not exhibit any absorptions attributable to carbonyl, but a pronounced band in the hydroxyl absorption range.

By titration with acetic anhydride, as shown in example 6, an aquivalent weight, with respect to hydroxy, of 650, corresponding to formula: 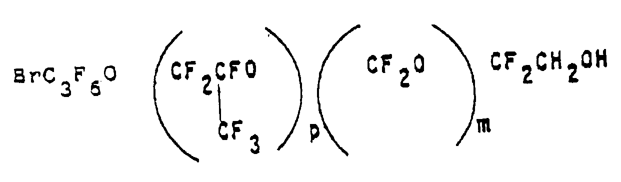
was determined.

## Claims (Claims for the following Contracting State(s): BE, DE, FR, GB, NL, SE)

1. Functionalized fluoropolyethers comprising sequences of statistically distributed perfluorooxyalkylene units selected from: 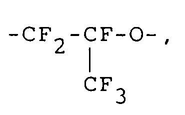 -CF₂-CF₂-O-; -CF₂O-, 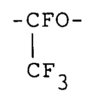 and having a functional end group Y, the other end group being a perhaloalkyl group containing one or two halogen atoms different from fluorine, said fluoropolyethers being represented by the following general formulae (I), (II) and (III): 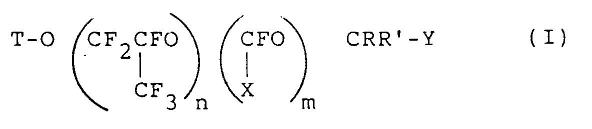 wherein: X is F or CF₃, R and R', the same or different from each other, are selected from F, Cl, Br and I;
T is a perhaloalkyl group containing from one to three carbon atoms and one or two atoms selected from Cl, Br and I;
n ranges from 0.85 to 15, with m/n being from 0.01 to 0.5;
Y is a group of formula 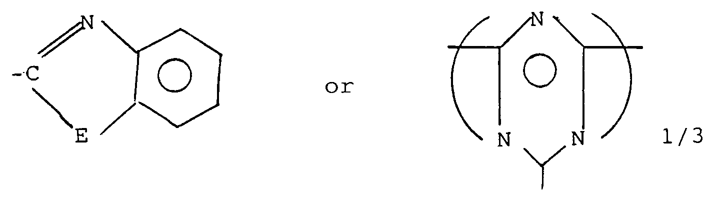 (E = NH, O or S) or -CN; -CH₂Z; -COR''';
wherein:
(A) for Y = -CH₂Z, Z may be a group OR'', R'' being selected from hydrogen; 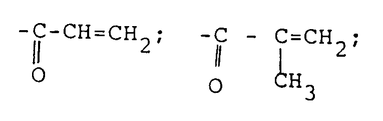 -(CH₂CH₂O)_{b}H 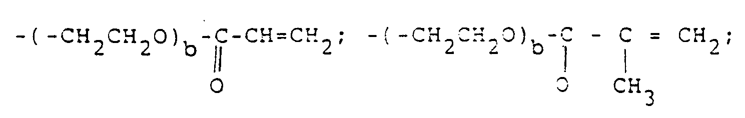 (b = a number ranging from 1 to 15)
-CH₂-CH=CH₂; 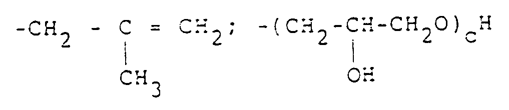 ranging from 1 to 3); 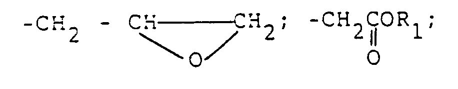 (wherein R₁ is C₁₋₃₀ alkyl, optionally containing ether bonds of type -C-O-C-;
or R₁ represents -(CH₂-CH₂O)ₙH, n ranging from 1 to 15;) 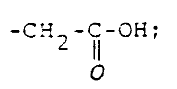 -CH₂-CH₂-CH₂SO₃H; 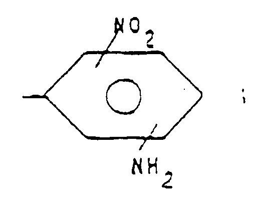 naphthyl; a mono- or polysubstituted alkyl benzyl or alkoxy benzyl group of the type: 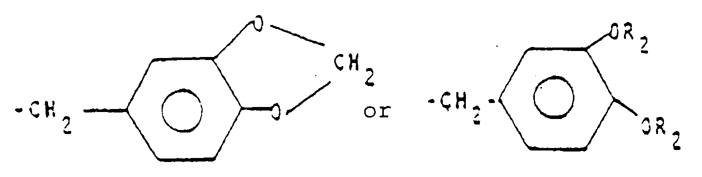 (wherein R₂ is C₁₋₄ alkyl); -NR₃R₄; (R₃ and R₄, the same or different from each other, being selected from hydrogen and the groups given for R₁ and, additionally, for R₃ = H, R₄ may be 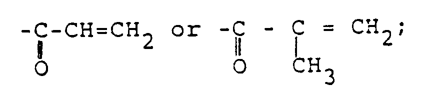 or R₃, R₄ and N together may form a ring of formula: 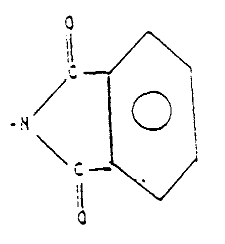 wherein the phenyl group may have attached a group of formula: 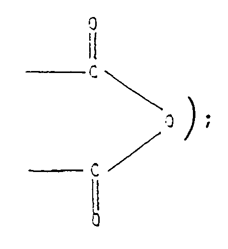
(B) for Y = COR''', R''' may represent -NHR₅, R₅ being selected from hydrogen; C₁₋₈ alkyl; mono- or poly-hydroxyalkyl having 1 to 8 carbon atoms; C₁₋₈-aminoalkyl; allyl; methallyl; trimethoxy- or triethoxy-silylalkyl of formula:
R₆-Si(OCH₃)₃ or R₆Si(OC₂H₅)₃, (R₆ = C₁₋₈ -alkylene); isocyano alkyl of formula R₆NCO; optionally alkyl substituted isocyanocycloalkyl having 5 or 6 carbon atoms in the ring; or optionally alkyl-substituted isocyanoaryl having 6 to 10 carbon atoms;
or R''' may be an optionally alkyl- or halogen-substituted aromatic radical;
T'-O (CF₂CF₂O)ₚ (CF₂O)ₛ CRR' Y (II)
wherein: T' = ACF₂CF₂-, ACF₂-, ACF₂CF(A)-;
R, R' and Y are the same as defined above for formula (I); A is Cl, Br or I; p ranges from 1 to 20, and s/p is a number of from 0.5 to 2; 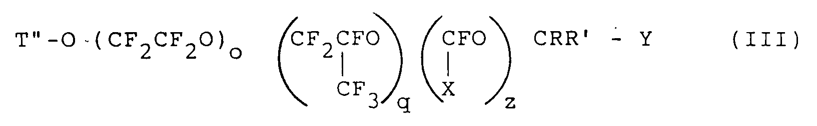 wherein: Y, X, R and R' are the same as defined above for formula (I);
T'' is equal to T or T', o and q are numbers, zero included, such that $\text{o+q = 1 to 20}$ , $\text{z/o+q ranging from 0.01 to 0.05}$ n, m, p, s, o, q and z are average numbers.

2. Fluoropolyethers according to claim 1, wherein T is ACF₂-; 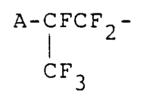 or ACF₂CF(CF₃)-; A being Cl, Br or I.

3. Use of the fluoropolyethers according to claims 1 or 2 as surface modifiers for polymeric and inorganic materials.

## Claims (Claims for the following Contracting State(s): ES)

1. Process for the preparation of functionalized fluoropolyethers comprising sequences of statistically distributed perfluorooxyalkylene units selected from: 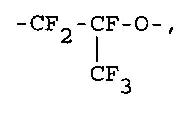 -CF₂-CF₂-O-; -CF₂O-, 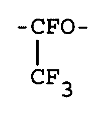 and having a functional end group Y, the other end group being a perhaloalkyl group containing one or two halogen atoms different from fluorine, said fluoropolyethers being represented by the following general formulae (I), (II) and (III): 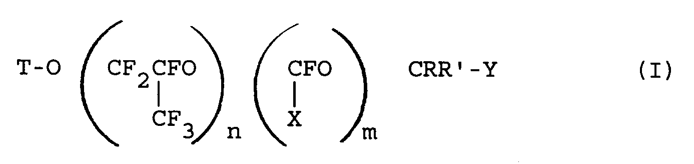 wherein: X is F or CF₃; R and R', the same or different from each other, are selected from F, Cl, Br and I;
T is a perhaloalkyl group containing from one to three carbon atoms and one or two atoms selected from Cl, Br and I;
n ranges from 0.85 to 15, with m/n being from 0.01 to 0.5;
Y is a group of formula 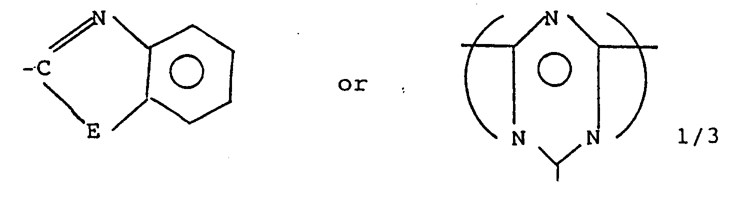 (E = NH, O or S) or -CN; -CH₂Z; -COR''';
wherein:
(A) for Y = -CH₂Z, Z may be a group OR'', R'' being selected from hydrogen; 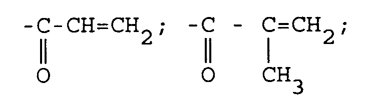 -(CH₂CH₂O)_{b}H; 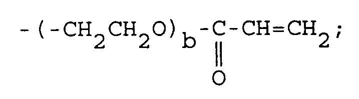 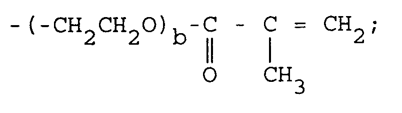 (b = a number ranging from 1 to 15)
-CH₂-CH=CH₂; 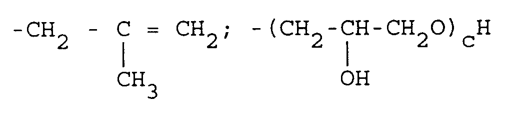 (c = a number ranging from 1 to 3); 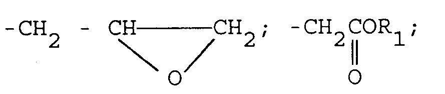 (wherein R₁ is C₁₋₃₀ alkyl, optionally containing ether bonds of type -C-O-C-; or R₁ represents -(CH₂-CH₂O)ₙH, n ranging from 1 to 15;) 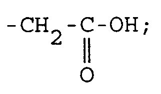 -CH₂-CH₂-CH₂SO₃H; 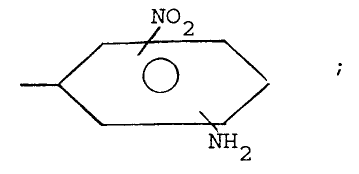 naphthyl; a mono- or polysubstituted alkyl benzyl or alkoxy benzyl group of the type: 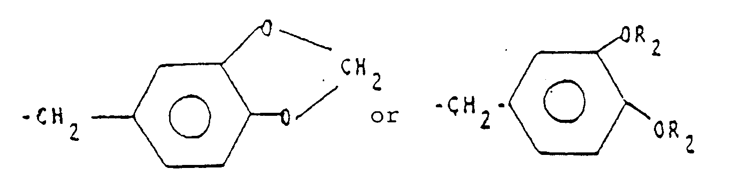 (wherein R₂ is C₁₋₄ alkyl); -NR₃R₄; (R₃ and R₄, the same or different from each other, being selected from hydrogen and the groups given for R₁ and, additionally, for R₃ = H, R₄ may be 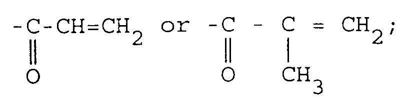 or R₃, R₄ and N together may form a ring of formula: 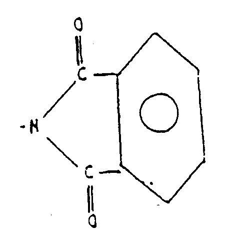 wherein the phenyl group may have attached a group of formula: 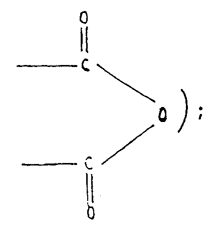
(B) for Y = COR''', R''' may represent -NHR₅, R₅ being selected from hydrogen; C₁₋₈ alkyl; mono- or polyhydroxyalkyl having 1 to 8 carbon atoms; C₁₋₈-aminoalkyl; allyl; methallyl; trimethoxy- or triethoxysilylalkyl of formula:
R₆-Si(OCH₃)₃ or R₆Si(OC₂H₅)₃, (R₆ = C₁₋₈-alkylene);
isocyano alkyl of formula R₆NCO; optionally alkyl substituted isocyanocycloalkyl having 5 or 6 carbon atoms in the ring; or optionally alkyl-substituted isocyanoaryl having 6 to 10 carbon atoms;
or R''' may be an optionally alkyl- or halogen-substituted aromatic radical;
T'-O (CF₂CF₂O)ₚ (CF₂O)ₛ CRR' Y (II)
wherein: T' = ACF₂CF₂-, ACF₂-, ACF₂CF(A)-;
R, R' and Y are the same as defined above for formula (I); A is Cl, Br or I; p ranges from 1 to 20, and s/p is a number of from 0.5 to 2; 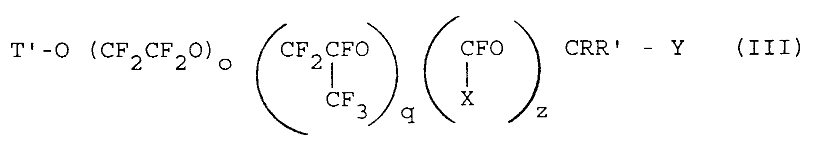 wherein: Y, X, R and R' are the same as defined above for formula (I);
T'' is equal to T or T', o and q are numbers, zero included, such that $\text{o+q = 1 to 20}$ , $\text{z /o+q ranging from 0.01 to 0.05}$ and n, m, p, s, o, q and z are average numbers;
said process comprising
(1) for Y = -COR''', wherein R''' = -NHR₅:
the reaction of ammonia or amines of formula NH₂R₅ with the corresponding alkyl esters, if the amines are strongly basic, or with the corresponding phenyl esters of the corresponding acylhalides, if the amines are weakly basic or highly sterically hindered; or the reaction of the fluoropolyether having an acid end group -COOH with compounds containing -NCO groups at temperatures ranging from 100° to 120°C, under generation of CO₂;
(2) for Y = -COR''', wherein R''' = optionally substituted aromatic radical:
the Friedel-Crafts reaction between the corresponding aromatic compound and the perfluoropolyether containing an acyl group (-COCl), or the reaction of lithium-aromatic derivatives and perfluoropolyethers having an ester end group;
(3) for Y = -CH₂Z wherein Z = OR'':
the reduction of the group 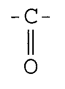 of the corresponding carboxylic or ester starting materials with Li, Na, B, Al complex hydrides, resulting in the corresponding alcohol derivative (R'' = H);
and, for R'' ≠ H,
the nucleophilic reaction of the corresponding alcoholate with compounds of formula R''X, where X is a removable halogen; or the addition of the alcoholate to cyclic epoxy compounds;
(4) for Z = -NR₃R₄:
the reduction of the corresponding amide derivatives (when R₃ and R₄ do not contain reducible groups); or the reduction of the corresponding perfluoropolyethers containing end groups of formula 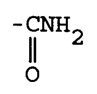 with the hydrides mentioned above and the subsequent reaction of one or two hydrogen atoms of the -NH₂ group with R₄X compounds (X = halogen), or, when R₃ and R₄ form a cyclic imide, the direct reaction of the -NH₂ group with a cyclic anhydride of formula: 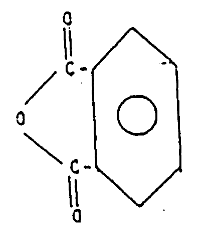
(5) for Y = CN:
the dehydration of the -CONH₂ group of the corresponding amide derivative with P₂O₅ at temperatures of from 100° to 200°C.

2. Process according to claim 1 wherein fluoropolyethers wherein T is ACF₂-; 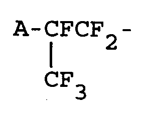 or ACF₂CF(CF₃)-, A being Cl, Br or I,
are prepared.

3. Use of the fluoropolyethers prepared according to the process of claims 1 or 2 as surface modifiers for polymeric and inorganic materials.

## Patentansprüche (Patentansprüche für folgende(n) Vertragsstaat(en): BE, DE, FR, GB, NL, SE)

1. Funktionalisierte Fluorpolyether, die Abfolgen von statistisch verteilten Perfluoroxyalklen-Einheiten, die ausgewählt sind aus: 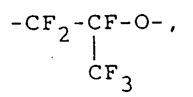 -CF₂-CF₂-O-; -CF₂O-, 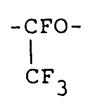 umfassen und eine funktionelle Endgruppe Y aufweisen, wobei die andere Endgruppe eine Perhalogenalkylgruppe, die ein oder zwei von Fluor verschiedene Halogenatome enthält, ist, wobei diese Fluorpolyether durch die folgenden allgemeinen Formeln (I), (II) und (III) dargestellt werden: 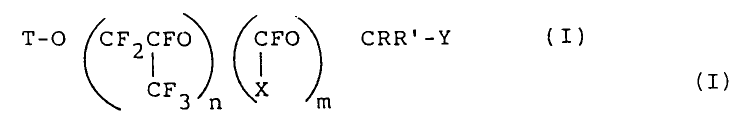 worin: X für F oder CF₃ steht; R und R', gleich oder verschieden voneinander, aus F, Cl, Br und I ausgewählt sind; T eine Perhalogenalkylgruppe darstellt, die ein bis drei Kohlenstoffatome und ein oder zwei aus Cl, Br und I ausgewählte Atome enthält;
n im Bereich von 0,85 bis 15 liegt, wobei m/n 0,01 bis 0,5 beträgt;
Y eine Gruppe der Formel 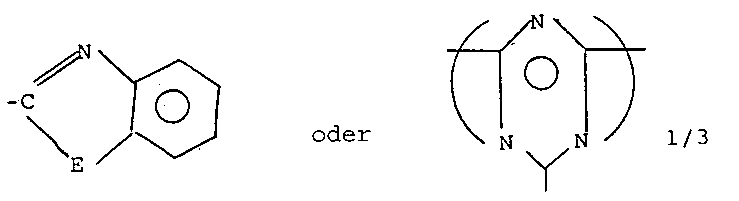 (E = NH, O oder S) oder -CN; -CH₂Z; -COR''' ist; worin:
(A) für Y = -CH₂Z, Z darstellen kann eine Gruppe OR'', wobei R'' ausgewählt ist aus Wasserstoff; 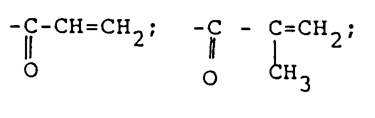 -(CH₂CH₂O)_{b}H 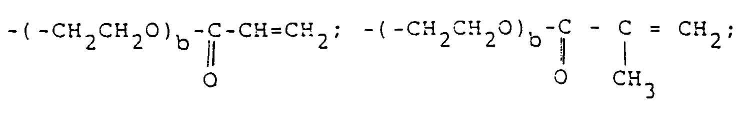 (b = eine Zahl im Bereich von 1 bis 15)
-CH₂-CH=CH₂; 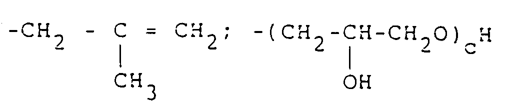 (c = eine Zahl im Bereich von 1 bis 3); 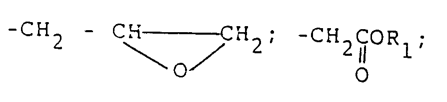 (worin R₁ C₁₋₃₀-Alkyl, gegebenenfalls Ether-Bindungen des Typs -C-O-C- enthaltend, ist; oder R₁ für -(CH₂-CH₂O)ₙH steht, wobei n im Bereich von 1 bis 15 liegt); 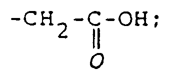 -CH₂-CH₂-CH₂SO₃H; 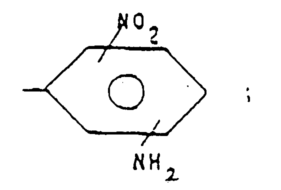 Naphthyl; einer mono- oder polysubstituierten Alkylbenzyl- oder Alkoxybenzylgruppe des Typs: 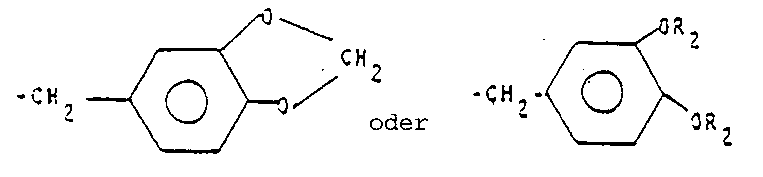 (worin R₂ für C₁₋₄ -Alkyl steht); -NR₃R₄ (wobei R₃ und R₄, gleich oder verschieden voneinander, ausgewählt sind aus Wasserstoff und den für R₁ angegebenen Gruppen und zusätzlich R₄ für R₃ = H 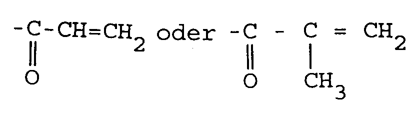 sein kann; oder R₃, R₄ und N zusammen einen Ring der Formel: 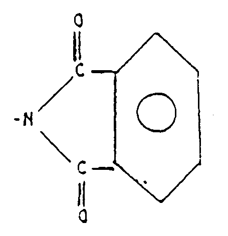 bilden können, wobei die Phenylgruppe an eine Gruppe der Formel: 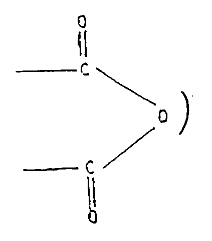 geknüpft sein kann);
(B) für Y = COR''', R''' darstellen kann -NHR₅, wobei R₅ ausgewählt ist aus Wasserstoff; C₁₋₈-Alkyl; Mono- oder Polyhydroxyalkyl mit 1 bis 8 Kohlenstoffatomen; C₁₋₈-Aminoalkyl; Allyl; Methallyl; Trimethoxy- oder Triethoxy-silylalkyl der Formel: R₆-Si(OCH₃)₃ oder R₆Si(OC₂H₅)₃ (R₆ = C₁₋₈-Alkylen); Isocyanoalkyl der Formel R₆NCO; gegebenenfalls Alkyl-substituiertes Isocyanocycloalkyl mit 5 oder 6 Kohlenstoffatomen im Ring; oder gegebenenfalls Alkyl-substituiertes Isocyanoaryl mit 6 bis 10 Kohlenstoffatomen;
oder R''' ein gegebenenfalls Alkyl- oder Halogensubstituierter aromatischer Rest sein kann;
T'-O(CF₂CF₂O)ₚ(CF₂O)ₛCRR'Y (II)
worin: T' = ACF₂CF₂-, ACF₂-, ACF₂CF(A)-;
R, R' und Y genauso definiert sind wie oben für Formel (I); A für Cl, Br oder I steht; p im Bereich von 1 bis 20 liegt und s/p eine Zahl von 0,5 bis 2 ist; 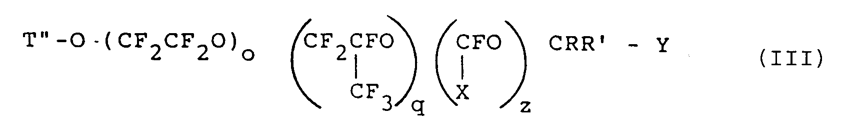 worin: Y, X, R und R' genauso definiert sind wie oben für Formel (I);
T'' gleich T oder T' ist, o und q solche Zahlen, einschließlich 0, sind, daß $\text{o + q = 1 bis 20}$ , wobei $\text{z/o + q im Bereich von 0,01 bis 0,05 liegt}$ 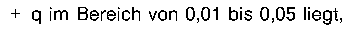 , n, m, p, s, o, q und z durchschnittliche Zahlen sind.

2. Fluorpolyether nach Anspruch 1, in denen T für ACF₂-; 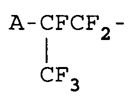 oder ACF₂CF(CF₃)- steht; wobei A für Cl, Br oder I steht.

3. Verwendung der Fluorpolyether nach Anspruch 1 oder 2 als Oberflächen-Modifizierungsmittel für Polymere und anorganische Materialien.

## Patentansprüche (Patentansprüche für folgende(n) Vertragsstaat(en): ES)

1. Verfahren zur Herstellung von funktionalisierten Fluorpolyethern, die Abfolgen von statistisch verteilten Perfluoroxyalkylen-Einheiten, die ausgewählt sind aus: 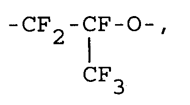 -CF₂-CF₂-O-; -CF₂O-, 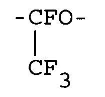 umfassen und eine funktionelle Endgruppe Y aufweisen, wobei die andere Endgruppe eine Perhalogenalkylgruppe, die ein oder zwei von Fluor verschiedene Halogenatome enthält, ist, wobei die Fluorpolyether durch die folgenden allgemeinen Formeln (I), (II) und (III) dargestellt werden: 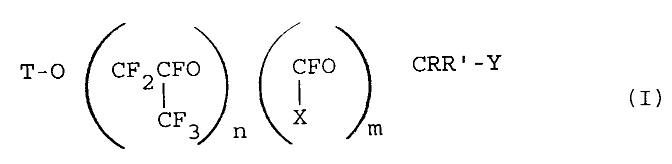 worin: X für F oder CF₃ steht; R und R', gleich oder verschieden voneinander, aus F, Cl, Br und I ausgewählt sind; T eine Perhalogenalkylgruppe darstellt, die ein bis drei Kohlenstoffatome und ein oder zwei aus Cl, Br und I ausgewählte Atome enthält;
n im Bereich von 0,85 bis 15 liegt, wobei m/n 0,01 bis 0,5 beträgt;
Y eine Gruppe der Formel 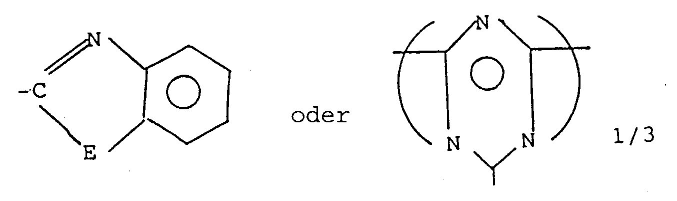 (E = NH, O oder S) oder -CN; -CH₂Z; -COR''' ist; worin:
(A) für Y = -CH₂Z, Z darstellen kann eine Gruppe OR'', wobei R'' ausgewählt ist aus Wasserstoff; 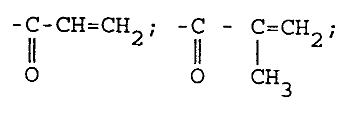 -(CH₂CH₂O)_{b}H; 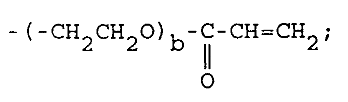 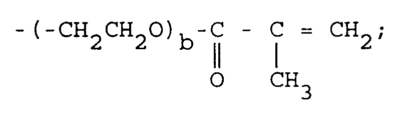 (b = eine Zahl im Bereich von 1 bis 15)
-CH₂-CH=CH₂; 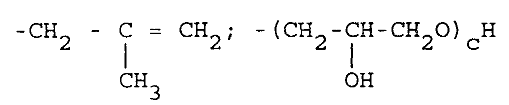 (c = eine Zahl im Bereich von 1 bis 3); 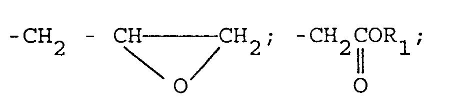 (worin R₁ C₁₋₃₀-Alkyl, gegebenenfalls Ether-Bindungen des Typs -C-O-C- enthaltend, ist; oder R₁ für -(CH₂-CH₂O)ₙH steht, wobei n im Bereich von 1 bis 15 liegt); 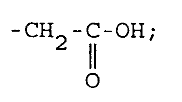 -CH₂-CH₂-CH₂SO₃H; 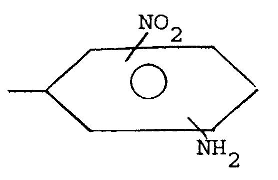 Naphthyl; einer mono- oder polysubstituierten Alkylbenzyl- oder Alkoxybenzylgruppe des Typs: 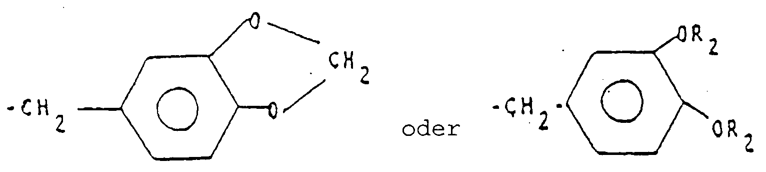 (worin R₂ für C₁₋₄-Alkyl steht); -NR₃R₄ (wobei R₃ und R₄, gleich oder verschieden voneinander, ausgewählt sind aus Wasserstoff und den für R₁ angegebenen Gruppen und zusätzlich R₄ für R₃ = H 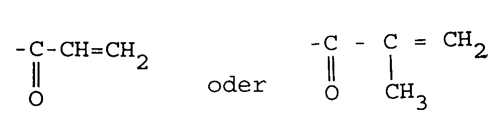 sein kann; oder R₃, R₄ und N zusammen einen Ring der Formel: 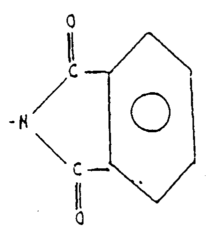 bilden können, wobei die Phenylgruppe an eine Gruppe der Formel: 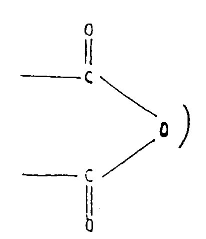 geknüpft sein kann);
(B) für Y = COR''', R''' darstellen kann -NHR₅, wobei R₅ ausgewählt ist aus Wasserstoff; C₁₋₈-Alkyl; Mono- oder Polyhydroxyalkyl mit 1 bis 8 Kohlenstoffatomen; C₁₋₈-Aminoalkyl; Allyl; Methallyl; Trimethoxy- oder Triethoxy-silylalkyl der Formel:
R₆-Si(OCH₃)₃ oder R₆Si(OC₂H₅)₃ (R₆ = C₁₋₈-Alkylen); Isocyanoalkyl der Formel R₆NCO; gegebenenfalls Alkyl-substituiertes Isocyanocycloalkyl mit 5 oder 6 Kohlenstoffatomen im Ring; oder gegebenenfalls Alkyl-substituiertes Isocyanoaryl mit 6 bis 10 Kohlenstoffatomen;
oder R''' ein gegebenenfalls Alkyl- oder Halogensubstituierter aromatischer Rest sein kann;
T'-O(CF₂CF₂O)ₚ(CF₂O)ₛCRR'Y (II)
worin: T' = ACF₂CF₂-, ACF₂-, ACF₂CF(A)-;
R, R' und Y genauso definiert sind wie oben für Formel (I); A für Cl, Br oder I steht; p im Bereich von 1 bis 20 liegt und s/p eine Zahl von 0,5 bis 2 ist; 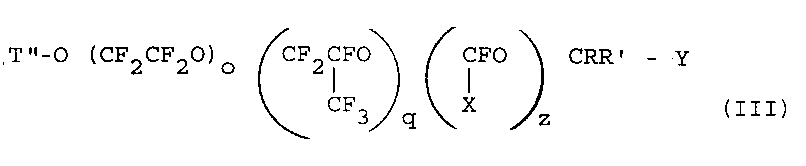 worin: Y, X, R und R' genauso definiert sind wie oben für Formel (I);
T'' gleich T oder T' ist, o und q solche Zahlen, einschließlich 0, sind, daß $\text{o + q = 1 bis 20}$ , wobei $\text{z/o + q im Bereich von 0,01 bis 0,05 liegt}$ 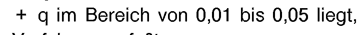 , n, m, p, s, o, q und z durchschnittliche Zahlen sind; wobei das Verfahren umfaßt
(1) für Y = -COR''', wobei R''' = -NHR₅:
die Umsetzung von Ammoniak oder Aminen der Formel NH₂R₅ mit den entsprechenden Alkylestern, falls die Amine stark basisch sind, oder mit den entsprechenden Phenylestern der entsprechenden Acylhalogenide, wenn die Amine schwach basisch oder sterisch stark gehindert sind; oder die Umsetzung der Fluorpolyether mit einer sauren Engruppe -COOH mit -NCO-Gruppen enthaltenden Verbindungen bei Temperaturen im Bereich von 100 bis 120°C unter Erzeugung von CO₂;
(2) für Y = -COR''', wobei R''' = gegebenenfalls substituierter aromatischer Rest:
die Friedel-Crafts-Reaktion zwischen der entsprechenden aromatischen Verbindung und dem Perfluorpolyether, der eine Acylgruppe (-COCl) enthält, oder die Umsetzung von Lithium-aromatischen Derivaten und Perfluorpolyethern mit einer Ester-Endgruppe;
(3) für Y = -CH₂Z, wobei Z = OR'':
die Reduktion der Gruppe -C(=O)- der entsprechenden Carboxyl- oder Ester-Ausgangsmaterialien mit Li, Na, B, Al-Komplex-Hydriden, was in dem entsprechenden Alkohol-Derivat (R'' = H) resultiert;
und, für R'' ≠ H,
die nukleophile Reaktion des obigen Alkohols und/oder des entsprechenden Alkoholats mit Verbindungen der Formel R''X, wobei X ein entfernbares Halogen darstellt; oder die Addition des Alkohols und/oder Alkoholats an cyclische Epoxy-Verbindungen;
(4) für Z = -NR₃R₄:
die Reduktion der entsprechenden Amid-Derivate (wenn R₃ und R₄ keine reduzierbaren Gruppen enthalten); oder die Reduktion der entsprechenden Perfluorpolyether, die Endgruppen der Formel 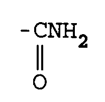 aufweisen, mit den oben erwähnten Hydriden und die anschließende Umsetzung von einem oder zwei Wasserstoffatomen der Gruppe -NH₂ mit R₄X-Verbindungen (X = Halogen) oder, wenn R₃ und R₄ ein cyclisches Imid bilden, die direkte Umsetzung der Gruppe -NH₂ mit einem cyclischen Anhydrid der Formel: 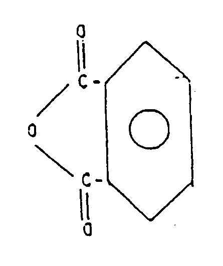
(5) für Y = CN:
die Dehydratisierung der Gruppe -CONH₂ des entsprechenden Amid-Derivats mit P₂O₅ bei Temperaturen von 100 bis 200°C.

2. Verfahren nach Anspruch 1, in welchem Fluorpolyether hergestellt werden, in denen T für ACF₂-; 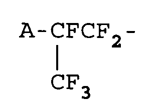 oder ACF₂CF(CF₃)- steht, wobei A Cl, Br oder I darstellt.

3. Verwendung der gemäß dem Verfahren nach den Ansprüchen 1 oder 2 hergestellten Fluorpolyether als Oberflächen-Modifizierungsmittel für Polymere und anorganische Materialien.

## Revendications (Revendications pour l'(les) Etat(s) contractant(s) suivant(s): BE, DE, FR, GB, NL, SE)

1. Polyéthers fluorés fonctionalisés comprenant des séquences d'unités perfluorooxyalkylène distribuées de façon statistique, choisies parmi : 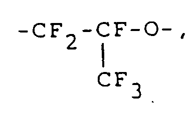 -CF₂-CF₂-O-; -CF₂O-, 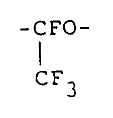 et ayant un groupe terminal fonctionnel Y, l'autre groupe terminal étant un groupe perhaloalkyle contentant un ou deux atomes d'halogène différents du fluor, ces polyéthers fluorés étant représentés par les formules générales suivantes (I), (II) et (III) : 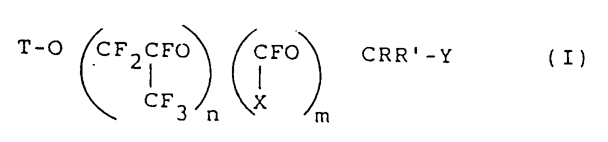 où X est un atome de fluor ou un groupe CF₃; R et R' sont identiques ou différents l'un de l'autre et sont choisis parmi les atomes de F, Cl, Br et I; T est un groupe perhaloalkyle contenant de un à trois atomes de carbone et un ou deux atomes choisis parmi les atomes de Cl, Br et I;
n est dans la gamme de 0,85 à 15, avec m/n compris dans la gamme de 0,01 à 0,5;
Y est un groupe -CN; -CH₂Z; -COR'''; ou un groupe de formule : 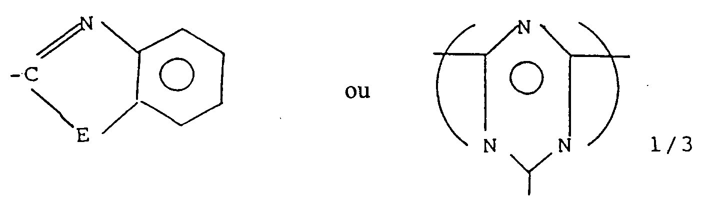 (E = NH, O ou S)
où
(A) lorsque Y est un groupe -CH₂Z, Z peut être un groupe OR'', dans lequel R'' est choisi parmi un atome d'hydrogène; 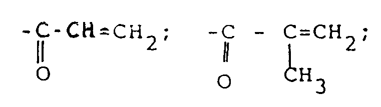 -(CH₂CH₂O)_{b}H 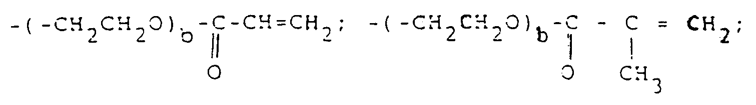 (b est un nombre de 1 à 15)
-CH₂-CH=CH₂; 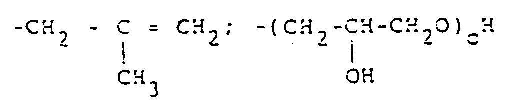 (c est un nombre dans la gamme de 1 à 3); 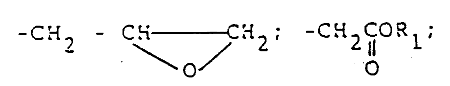 (R₁ est un groupe alkyle contenant de 1 à 30 atomes de carbone, contenant éventuellement des liaisons éthers de type -C-O-C-; ou R₁ est un groupe -(CH₂-CH₂O)ₙH dans lequel n est dans la gamme de 1 à 15) 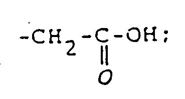 -CH₂-CH₂-CH₂SO₃H; 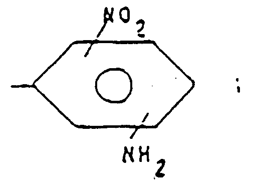 un groupe naphtyle; un groupe benzyle mono- ou poly-substitué par un groupe alkyle ou un groupe alcoxy du type : 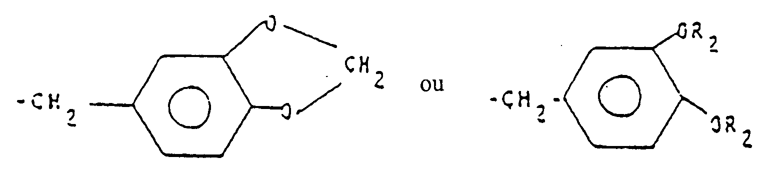 (R₂ est un groupe alkyle contenant de 1 à 4 d'atomes de carbone); un groupe - NR₃R₄, (dans lequel R₃ et R₄, identiques ou différents l'un de l'autre, peuvent être un atome d'hydrogène ou les groupes R₁ tels que définis plus haut, et de plus, lorsque R₃ est un atome d'hydrogène, R₄ peut être un groupe de formule: 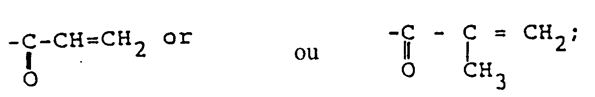 ou R₃, R₄ et N peuvent former ensemble un cycle de formule : 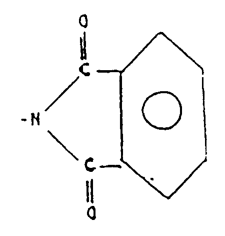 dans laquelle le groupe phényle peut être relié à un groupe de formule : 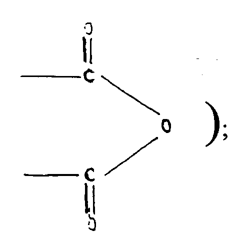
(B) lorsque Y est un groupe -COR''', R''' peut être un groupe -NHR₅, dans lequel R₅ peut être un atome d'hydrogène; un groupe alkyle en C₁₋₈; un groupe mono-ou poly-hydroxyalkyle ayant 1 à 8 atomes de carbone; un groupe aminoalkyle en C₁₋₈; un groupe allyle; un groupe méthallyle; un groupe triméthoxy- ou triéthoxy-silylalkyle de formule R₆-Si(OCH₃)₃ ou R₆Si(OC₂H₅)₃, où R₆ est un groupe alkylène en C₁₋₈; un groupe isocyano alkyle de formule R₆NCO; un groupe isocyanocycloalkyle dont le cycle a 5 ou 6 atomes de carbone éventuellement substitué par un groupe alkyle; ou un groupe isocyanoaryle avec 6 à 10 atomes de carbone éventuellement substitué par un groupe alkyle; ou R''' peut être un groupe aromatique éventuellent substitué par un groupe alkyle ou un atome d'halogène;
T'-O(CF₂CF₂O)p(CF₂O)ₛ CRR'Y (II)
dans lequel T' est un groupe ACF₂CF2-, ACF₂-, ACF₂CF(A)-; A est un atome de Cl, Br ou I; R, R', et Y sont tels que définis plus haut pour la formule (I); p est dans la gamme de 1 à 20, et s/p est un nombre de 0,5 à 2; 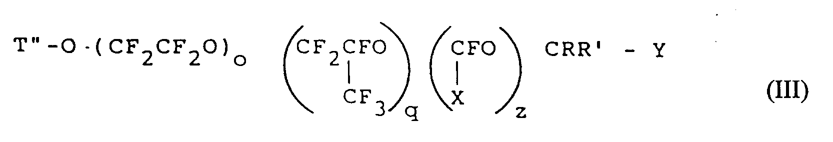 où Y, X, R et R' sont tels que définis plus haut pour la formule (I);
T'' est égal à T ou T', o et q sont des nombres, zéro inclus, tels que $\text{o + q = 1 à 20}$ , $\text{z/(o+q) est compris dans la gamme de 0,01 à 0,05}$ , et n, m, o, p, s, q et z représentent des nombres moyens.

2. Polyéthers fluorés selon la revendication 1, dans lesquels T est un groupe ACF₂-, A-C(CF₃)FCF₂- ou ACF₂CF(CF₃)-; A étant un atome de Cl, Br ou I.

3. Utilisation des polyéthers fluorés selon la revendication 1 ou 2, en tant qu'agents de modification de surface pour les matériaux polymères et inorganiques.

## Revendications (Revendications pour l'(les) Etat(s) contractant(s) suivant(s): ES)

1. Procédé de préparation de polyéthers fluorés fonctionalisés comprenant des séquences d'unités perfluorooxyalkylène distribuées de façon statistique, choisies parmi : 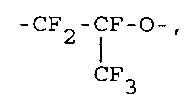 -CF₂-CF₂-O-; -CF₂O-, 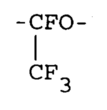 et ayant un groupe terminal fonctionnel Y, l'autre groupe terminal étant un groupe perhaloalkyle contenant un ou deux atomes d'halogène différents du fluor, ces polyéthers fluorés étant représentés par les formules générales suivantes (I), (II) et (III) : 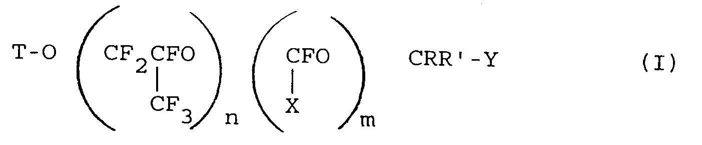 où X est un atome de fluor ou un groupe CF₃; R et R' sont identiques ou différents l'un de l'autre et sont choisis parmi les atomes de F, Cl, Br et I; T est un groupe perhaloalkyle contenant de un à trois atomes de carbone et un ou deux atomes choisis parmi les atomes de Cl, Br et I;
n est dans la gamme de 0,85 à 15, avec m/n compris dans la gamme de 0,01 à 0,5;
Y est un groupe -CN; -CH₂Z; -COR'''; ou un groupe de formule : 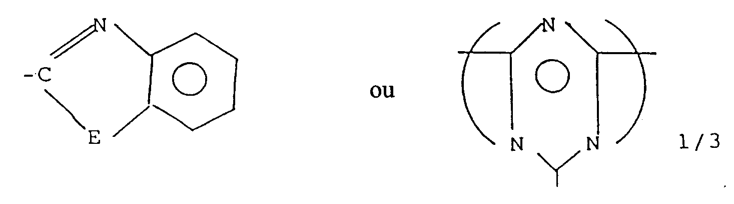 (E = NH, O ou S)
où
(A) lorsque Y est un groupe -CH₂Z, Z peut être un groupe OR'', dans lequel R'' est choisi parmi un atome d'hydrogène; 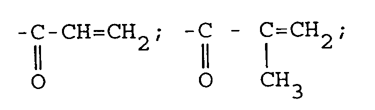 -(CH₂CH₂O)_{b}H; 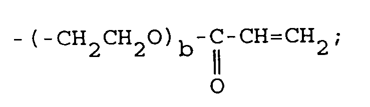 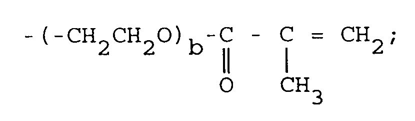 (b est un nombre de 1 à 15)
-CH₂-CH=CH₂; 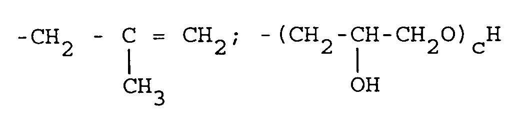 (c est un nombre dans la gamme de 1 à 3); 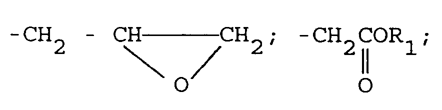 (R₁ est un groupe alkyle contenant de 1 à 30 atomes de carbone, contenant éventuellement des liaisons éthers de type -C-O-C-;
ou R₁ est un groupe -(CH₂-CH₂O)ₙH dans lequel n est dans la gamme de 1 à 15) 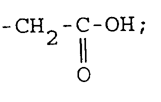 -CH₂-CH₂-CH₂SO₃H; 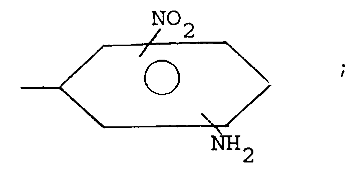 un groupe naphtyle; un groupe benzyle mono- ou poly-substitué par un groupe alkyle ou un groupe alcoxy du type : 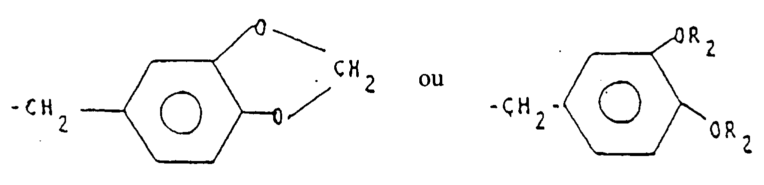 (R₂ est un groupe alkyle contenant de 1 à 4 d'atomes de carbone); un groupe - NR₃R₄, (dans lequel R₃ et R₄, identiques ou différents l'un de l'autre, peuvent être un atome d'hydrogène ou les groupes R₁ tels que définis plus haut, et de plus, lorsque R₃ est un atome d'hydrogène, R₄ peut être un groupe de formule: 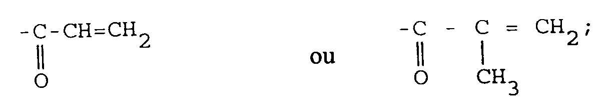 ou R₃, R₄ et N peuvent former ensemble un cycle de formule : 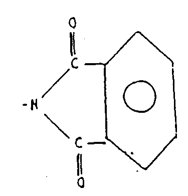 dans laquelle le groupe phényle peut être relié à un groupe de formule : 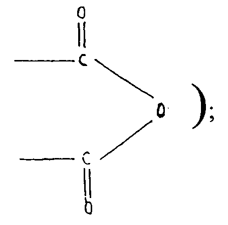
(B) lorsque Y est un groupe -COR''', R''' peut être un groupe -NHR₅, dans lequel R₅ peut être un atome d'hydrogène; un groupe alkyle en C₁₋₈; un groupe mono-ou poly-hydroxyalkyle ayant 1 à 8 atomes de carbone; un groupe aminoalkyle en C₁₋₈; un groupe allyle; un groupe méthallyle; un groupe triméthoxy- ou triéthoxy-silylalkyle de formule R₆-Si(OCH₃)₃ ou R₆Si(OC₂H₅)₃, où R₆ est un groupe alkylène en C₁₋₈; un groupe isocyano alkyle de formule R₆NCO; un groupe isocyanocycloalkyle dont le cycle a 5 ou 6 atomes de carbone éventuellement substitué par un groupe alkyle; ou un groupe isocyanoaryle avec 6 à 10 atomes de carbone éventuellement substitué par un groupe alkyle; ou R''' peut être un groupe aromatique éventuellent substitué par un groupe alkyle ou un atome d'halogène;
T'-O(CF₂CF₂O)p(CF₂O)ₛCRR'Y (II)
dans lequel T' est un groupe ACF₂CF2-, ACF₂-, ACF₂CF(A)-; A est un atome de Cl, Br ou I; R, R', et Y sont tels que définis plus haut pour la formule (I); p est dans la gamme de 1 à 20, et s/p est un nombre de 0,5 à 2; 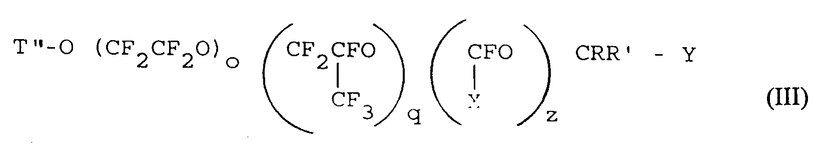 où Y, X, R et R' sont tels que définis plus haut pour la formule (I);
T'' est égal à T ou T', o et q sont des nombres, zéro inclus, tels que $\text{o + q = 1 à 20}$ , $\text{z/(o+q) est compris dans la gamme de 0,01 à 0,05}$ , et n, m, o, p, s, q et z représentent des nombres moyens; ledit procédé comprenant:
(1) lorsque Y = -COR''', où R''' = -NHR₅:
la réaction d'ammoniac ou d'amines de formule NH₂R₅ avec les esters alkyliques correspondants, si les amines sont fortement basiques, ou avec les esters phényliques correspondants des halogénures d'acyle correspondants, si les amines sont faiblement basiques ou fortement encombrées stériquement; ou la réaction du polyéther fluoré ayant un groupe terminal acide -COOH avec des composés contenant des groupes -NCO à des températures comprises dans la gamme de 100°C à 120°C, avec génération de CO₂;
(2) lorsque Y = -COR''', où R''' représente un radical aromatique éventuellement substitué:
la réaction de Friedel-Crafts entre le composé aromatique corespondant et le polyéther perfluoré contenant un groupe acyle (-COCl), ou la réaction de dérivés lithium-aromatiques et des polyéthers ayant un groupe terminal ester;
(3) lorsque Y ⁼ -CH₂Z, où Z = OR'':
la réduction du groupe >C=O des matières de départ carboxyliques ou esters avec des hydrures complexes de Li, Na, B, Al, conduisant au dérivé alcool correspondant (R''=H); et, pour R''≠H;
et pourR''≠H,
la réaction nucléophile de l'alcoolate corespondant avec des composés de formule R''X, dans laquelle X est un atome d'halogène mobile; ou l'addition de l'alcool et/ou de l'alcoolate à des composés époxy cycliques;
(4) lorsque Z = -NR₃R₄:
la réduction du dérivé amide correspondant (lorsque R₃ et R₄ ne contiennent pas de groupes réductibles); ou la réduction des polyéthers perfluorés correspondants contenant des groupes terminaux de formule - C(=O)NH₂, avec les hydrures mentionnés ci-dessus et la réaction ultérieure d'un ou de deux atomes d'hydrogène du groupe -NH₂ avec des composés R₄X (où X est un atome d'halogène), ou, lorsque R₃ et R₄ forment un imide cyclique, la réaction directe du groupe -NH₂ avec un anhydride cyclique de formule: 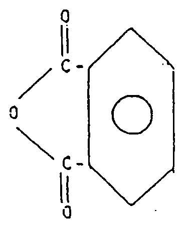
(5) lorsque Y = CN:
la déshydratation du groupe -CONH₂ du dérivé amide correspondant avac du P₂O₅ à des températures de 100° à 200°C.

2. Procédé selon la revendication 1, dans lequel les polyéthers fluorés, dans lesquels T est un groupe ACF₂-, A-C(CF₃)FCF₂- ou ACF₂CF(CF₃)-; A étant un atome de Cl, Br ou I, sont préparés.

3. Utilisation des polyéthers fluorés préparés selon la procédé selon la revendication 1 ou 2, en tant qu'agents de modification de surface pour les matériaux polymères et inorganiques.
